# EUROPÄISCHE PATENTSCHRIFT

(11) **EP 1 018 295 B1**
(45) Veröffentlichungstag und Bekanntmachung des Hinweises auf die Patenterteilung: **12.03.2003**
(21) Anmeldenummer: 99126052.2
(22) Anmeldetag: 28.12.1999
(51) Int. Cl.: A01K 5/00

(54) **Vorrichtung zum Mischen und Verteilen von Schüttgütern**
Apparatus for mixing and distributing bulk products
Dispositif à mélanger et distribuer des produits en vrac

(30) Priorität: 08.01.1999 DE 19900521
(43) Veröffentlichungstag der Anmeldung: 12.07.2000
(73) Patentinhaber: Firma Bernard van Lengerich Maschinenfabrik GmbH & Co., 48488 Emsbüren (DE)
(72) Erfinder: van Lengerich, Wilhelm, 48488 Emsbüren (DE); Altgilbers,Bernhard, 48488 Emsbüren (DE)
(74) Vertreter: Busse & Busse Patentanwälte

(56) Entgegenhaltungen:
- EP-A- 0 709 022
- EP-A- 0 793 911

## Beschreibung

Die Erfindung bezieht sich auf eine Vorrichtung zum Mischen und Verteilen von.Schüttgütern, insbesondere von kurz- und langfaserigem Silagegut in einer Ausbildung nach dem Oberbegriff des Patentanspruches 1.

Vorrichtungen der vorgenannten Art sind als sogenannte Futter-Mischverteilwagen bekannt und zum Beispiel mit einem Fahrgestell mit zwei Laufrädern und einer Deichsel zum Anhängen an einen landwirtschaftlichen Schlepper ausgestattet. Solche Futter-Mischverteilwagen können darüberhinaus auch noch mit einem zum Beispiel um eine horizontale Achse schwenkbaren Schneidrahmen oder dergleichen Abtrageorgan ausgerüstet sein, um aus Flach- oder Fahrsilos Silageblöcke auszuschneiden und sie über eine schwenkbare Ladefläche in den Aufnahme- und Mischraum des Behälters einzubringen.

Zum Austragen des Fördergutes sind üblicherweise - bezogen auf die Fahrtrichtung - am Ende des Behälters eine Austragöffnung und ein quer zur Fahrtrichtung ausgerichtetes Förderband angeordnet, um das gemischte Futter in einem Futtergang ausbringen zu können.

Nachteilig bei diesen bekannten Vorrichtungen ist, daß der Bauaufwand zum Austragen des Futtergutes erheblich ist. So ist das Förderband mit einer Antriebsvorrichtung zu versehen, die zudem so auszugestalten ist, daß wahlweise links oder rechts das Futter ausgetragen werden kann, so daß die Antriebsbewegung des Förderbandes umzukehren ist. Desweiteren ist die Austragöffnung zentral im hinteren Bereich der Behälterwandung vorzusehen, um sowohl für die Linksals auch für die Rechtsaustragöffnung gleichmäßig das Futter dem Förderband zuführen zu können. Nachteilig dabei ist, daß insbesondere am Ende eines Futterganges aufgrund der hinteren Anordnung des Förderbandes Futter nur in einem begrenzten Maße zugeführt werden kann.

Es ist Aufgabe der vorliegenden Erfindung, eine Vorrichtung der eingangs genannten Art zu schaffen, mit der das Fördergut mit einem verminderten Bauaufwand und darüber hinaus auch verbessert ausgetragen werden kann.

Zur Lösung dieser Aufgabe zeichnet sich die Vorrichtung der eingangs genannten Art durch die im Patentanspruch 1 angegebenen Merkmale aus. Vorteilhafte Ausgestaltungen der Erfindung sind in den Patentansprüchen 2 bis 6 angegeben.

Mit der zumindest einen asymmetrisch zur Achse des vorzugsweise senkrecht stehenden Förder- und Mischelementes angeordneten Austragsöffnung beziehungsweise deren asymmetrisch zur Rotationsachse vorgesehenen Austragsöffnungsbreite läßt sich ohne das Erfordernis eines Förderbandes durch einfache Betätigung eines Verschließelementes Fördergut austragen. Durch die asymmetrische Anordnung der Auftragsöffnung in einer Behälterseitenwand kann - bezogen auf die Förderrichtung des Förder- und Mischelementes - die Austragöffnung derart vorgesehen werden, daß sie sich - bezogen auf den Gutstrom - stetig und ohne bauliche Hindernisse direkt an den Gutstrom anschließt, so daß ohne die Gefahr von Verstopfungen oder Gutstrombehinderungen das Fördergut ausgetragen werden kann.

Durch gegenüberliegend in Seitenwänden vorgesehenen, spiegelbildlich - bezogen auf das Asymmetriemaß - versetzt angeordnete Austragöffnungen ist auch wahlweise links und rechts behinderungsfrei das Fördergut auszubringen, so daß Umschaltelemente zur Richtungsumkehr des Antriebes eines Förderbandes völlig entbehrlich sind. Durch die Anordnung von Austragöffnungen im Bereich des in aller Regel zentral im Behälter angeordneten Förder- und Mischelementes ist darüber hinaus auch am Ende eines Futterganges das Fördergut verbessert und aufgrund des behinderungsfreien Austragens schneller und mithin rationeller auszubringen.

Die Austragöffnungen werden vorzugsweise durch schwenkbare Klappenelemente geöffnet und geschlossen. Diese können durch Faltenbälge mit der Behälterseitenwandung verbunden sein, so daß in jeder Klappenstellung ein seitlicher Zugriff verhindert ist und darüberhinaus auch ein Fördergutstrom bishin zum Ende des Auswurfes geleitet ausgebracht werden kann.
Weitere Ausgestaltungen der Erfindung sowie Vorteile ergeben sich aus der nachfolgenden Beschreibung und der Zeichnung.

In der Zeichnung zeigen:
- Fig. 1: in einer schematischen Seitendarstellung ein Ausführungsbeispiel der Vorrichtung nach der Erfindung,
- Fig. 2: in einer schematischen Draufsicht das Ausführungsbeispiel nach Fig. 1.

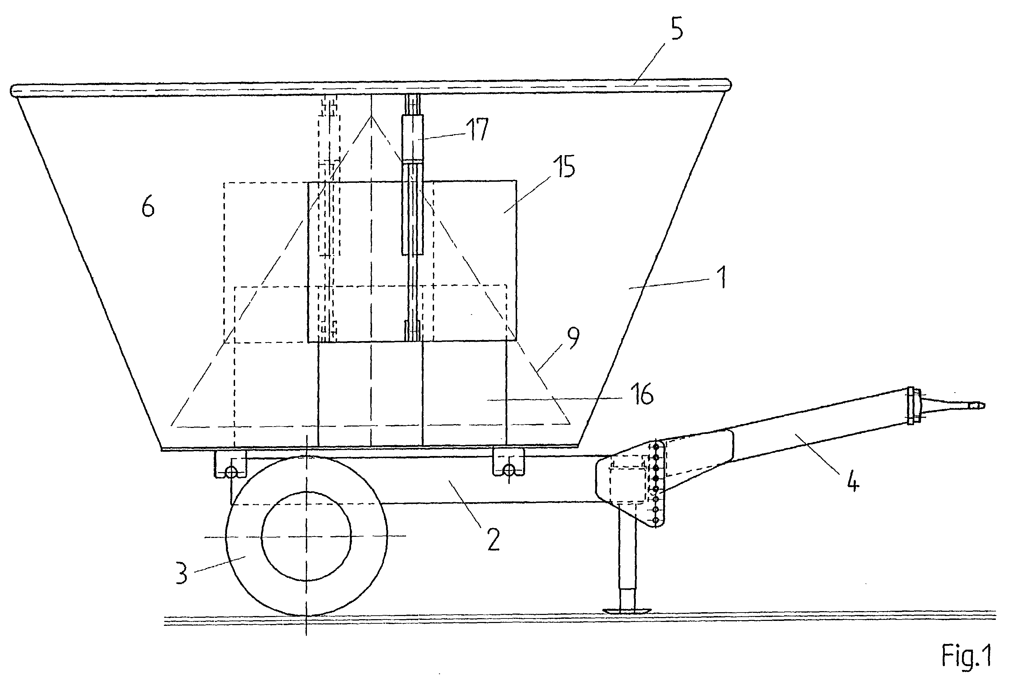

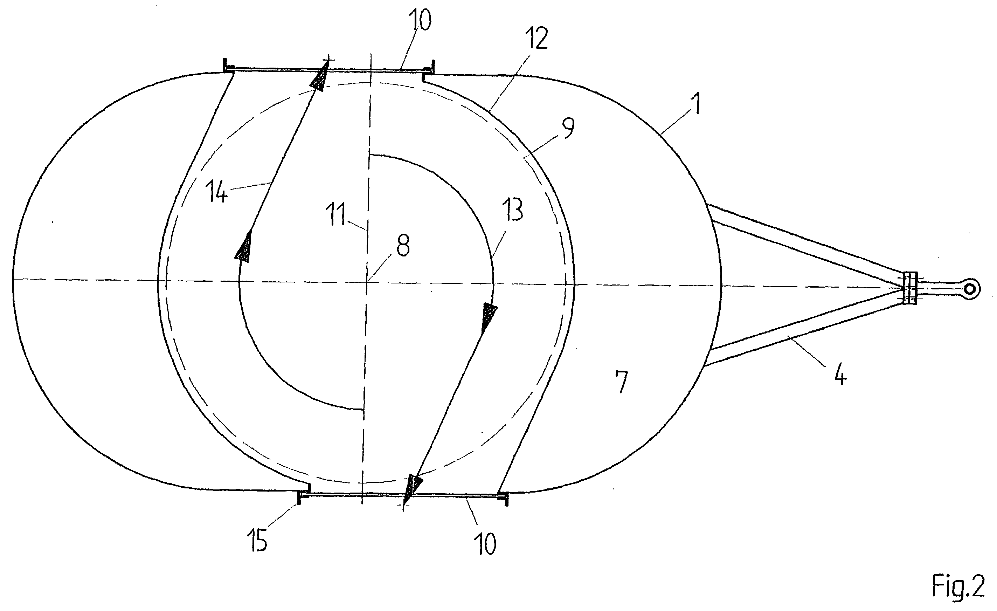

Die in der Zeichnung allgemein mit 1 bezifferte Vorrichtung zum Mischen und Verteilen von Schüttgütern ist in dem dargestellten Ausführungsbeispiel als Futtermischverteilwagen ausgebildet mit einem Fahrgestell 2 mit Laufrädern 3 sowie einer Deichsel 4 zum anhängen an einen nicht dargestellten Schlepper. Auf dem Fahrgestell 2 ist ein Behälter 5 mit einer Wandung 6 abgestützt, in dessen Inneren sich ein Aufnahmeraum 7 (Fig. 2) befindet. Der Behälter 5 ist an seiner Vorder- und Rückseite abgerundet ausgebildet und verjüngt sich von oben nach unten, so daß er eine leicht trichterförmige rechteckige, in Vorder- und Endbereichen abgerundete Gestaltung hat. Zentral innerhalb des Aufnahmeraumes mit senkrecht ausgerichteter Rotationsachse 8 (Fig. 2) ist ein allgemein mit 9 und nicht im einzelnen dargestelltes Förder- und Mischelement angeordnet, das sich nach unten hin erweitert (Fig. 1), so daß es bodenseitig im wesentlichen den Aufnahmeraum bestreicht. In den Behälterseitenwänden sind in der Behälterseitenwandung Austragöffnungen 10 vorgesehen, und zwar derart, daß sie asymmetrisch bezogen auf die senkrechte Lage der Rotationsachse 8 angeordnet sind. Asymmetrisch in diesem Sinne bedeutet, daß, wie dies aus Fig. 2 sehr anschaulich hervorgeht, sich die jeweilige Austragöffnung einenends mit einem geringeren Abstandsmaß von der Breite her zur Verlängerungslinie, die die Rotationsachse 8 schneidet (Bezugsziffer 11 in Fig. 2) erstreckt als die andere Seite der Austragöffnung 10 bezogen auf deren Breite und deren Lage zur Linie 11, so daß sich diese von ihrer Verlängerung zum Gutstrom 12 (Fig. 2) in etwa tangential erstreckt. Dadurch kann der Gutstrom bezogen auf die Förderrichtung 13 (Fig. 2) behinderungsfrei in Richtung der Pfeile 14 in Fig. 2 ausgebracht werden.

## Patentansprüche

1. Vorrichtung (1) zum Mischen und Verteilen von Schüttgütern, insbesondere von kurz- und langfaserigem Silagegut, mit einem Behälter (5,6) zur Aufnahme von Fördergut, der ein vorzugsweise um eine senkrecht ausgerichtete Rotationsachse (8) in Rotationsbewegung versetzbares Förderund Mischelement (9) sowie zumindest eine Austragöffnung (10) aufweist, **dadurch gekennzeichnet, daß** zumindest eine Austragöffnung (10) eine sich asymmetrisch zur Rotationsachse (8) des Förder- und Mischelementes (9) aufweisende Austragbreite in der Behälterwandung (6) hat und bezüglich ihrer Lage zur Rotationsachse (8) einenends eine längere Öffnungsbreite hat als anderenends.

2. Vorrichtung nach Anspruch 1, **dadurch gekennzeichnet, daß** sich einenends die Verlängerung der Austragsöffnung (10) tangential an den bodenseitigen Förderkreis (12) des Fördergutes des Förder- und Mischelementes (9) anschließt.

3. Vorrichtung nach Anspruch 1 oder 2, **dadurch gekennzeichnet, daß** in gegenüberliegenden Behälterwandungen (6) zwei spiegelbildlich versetzt asymmetrisch angeordnete Aufnahmeaustragsöffnungen (10) vorgesehen sind.

4. Vorrichtung nach einem der Ansprüche 1 bis 3, **dadurch gekennzeichnet, daß** der Austragöffnung (10) ein höhenverstellbares Verschließelement zugeordnet ist.

5. Vorrichtung nach Anspruch 4, **dadurch gekennzeichnet, daß** das Verschließelement hydraulisch oder pneumatisch betätigbar ist.

6. Vorrichtung nach einem der Ansprüche 1 bis 3, **dadurch gekennzeichnet, daß** der Austragöffnung (10) eine um eine horizontale Achse (15) schwenkbare Verschlußklappe zugeordnet ist und diese über Faltenbälge mit der Behälterwandung (6) verbindbar ist.

## Claims

1. A device (1) for mixing and distributing bulk products, in particular short and long-fibre silage product, comprising a container (5, 6) for holding the delivered product, having a delivery and mixing unit (9) that can be made to rotate preferably about a vertical axis (8), and having at least one outlet (10), **characterized in that** at least one outlet (10) is located in the container wall (6) eccentric to the axis of rotation (8) of the delivery and mixing unit (9), which is wider at one end than the other in relation to the axis of rotation (8).

2. A device according to claim 1, **characterized in that** the extension of the outlet (10) is linked at one end tangentially to the product feed cycle (12) located at the bottom of the delivery and mixing unit (9).

3. A device according to claim 1 or claim 2, **characterized in that** two mirror-inverted eccentric outlets (10) are provided in opposing container walls (6).

4. A device according to any one of claims 1 through 3, **characterized in that** a vertically-adjustable shutting mechanism is associated with the outlet (10).

5. A device according to claim 4, **characterized in that** the shutting mechanism can be operated hydraulically or pneumatically.

6. A device according to any one of claims 1 through 3, **characterized in that** a flap pivoted on a horizontal axis (15) is associated with the outlet (10), which can be connected to the container walls (6) by way of bellows.

## Revendications

1. Dispositif (1) de mélange et de distribution de produits en vrac, en particulier de produit d'ensilage à fibres courtes et longues, comportant pour recevoir le produit transporté un réservoir (5, 6) lequel présente un élément de mélange et de transport (9) pouvant être déplacé en un mouvement rotatif de préférence autour d'un axe de rotation orienté verticalement (8), ainsi qu'au moins un orifice de décharge (10), **caractérisé en ce qu'**au moins un orifice de décharge (10) a dans la paroi de réservoir (6) une largeur se présentant de façon asymétrique par rapport à l'axe de rotation (8) de l'élément de mélange et de transport (9) et a en ce qui concerne sa situation par rapport à l'axe de rotation (8) à l'une de ses extrémités une largeur d'orifice plus grande qu'à l'autre extrémité.

2. Dispositif selon la revendication 1, **caractérisé en ce qu'**à une extrémité le prolongement de l'orifice de décharge (10) se raccorde tangentiellement au cercle de transport (12) côté fond du produit transporté de l'élément de transport et de mélange (9).

3. Dispositif selon la revendication 1 ou 2, **caractérisé en ce que** dans des parois de réservoir (6) opposées sont prévus deux orifices de décharge de réception (10) disposés de façon asymétrique. avec décalage spéculaire.

4. Dispositif selon l'une quelconque des revendications 1 à 3, **caractérisé en ce qu'**un élément de fermeture réglable en hauteur est affecté à l'orifice de décharge (10).

5. Dispositif selon la revendication 4, **caractérisé en ce que** l'élément de fermeture peut être actionné par voie hydraulique ou pneumatique.

6. Dispositif selon l'une quelconque des revendications 1 à 3, **caractérisé en ce qu'**un clapet de fermeture pouvant pivoter autour d'un axe horizontal (15) est affecté à l'orifice de décharge (10) et peut être raccordé à la paroi de réservoir (6) par l'intermédiaire de soufflets.
